# EUROPÄISCHE PATENTSCHRIFT

(11) **EP 3 483 583 B1**
(45) Veröffentlichungstag und Bekanntmachung des Hinweises auf die Patenterteilung: **18.06.2025**
(21) Anmeldenummer: 18201698.0
(22) Anmeldetag: 22.10.2018
(51) Int. Cl.: G01M 17/03, B60W 40/02, G07C 5/00

(54) **RAUPENFAHRZEUG**
TRACKED VEHICLE
VÉHICULE À CHENILLE

(30) Priorität: 08.11.2017 DE 102017126133
(43) Veröffentlichungstag der Anmeldung: 15.05.2019
(73) Patentinhaber: CLAAS Industrietechnik GmbH, 33106 Paderborn (DE)
(72) Erfinder: Morawitz, Martin, 33154 Salzkotten (DE); Verhorst, Jan-Willem, 59555 Lippstadt (DE); Meyer, Peter, 22927 Großhansdorf (DE)
(74) Vertreter: CLAAS Gruppe

(56) Entgegenhaltungen:
- WO-A1-2015/110841
- WO-A1-2017/000068
- WO-A1-2017/049393
- US-B1- 6 377 881

## Beschreibung

Die Erfindung betrifft ein Raupenfahrzeug, insbesondere ein landwirtschaftliches Raupenfahrzeug, mit den Merkmalen des Oberbegriffs von Anspruch 1 und ein Verfahren zur Betriebszustandserfassung und/oder Lebensdauerbestimmung mindestens eines Bodeneingriffsmittels eines Raupenfahrzeugs gemäß dem Oberbegriff von Anspruch 13.

Unter einem Raupenfahrzeug wird im Sinne der Erfindung jegliche Form von Fahrzeug mit einem Raupenfahrwerk und ggf. einem zusätzlichen Radfahrwerk verstanden. Ein Raupenfahrzeug verfügt insbesondere über einen eigenen Fahrantrieb für die Erzeugung eines Vortriebs, kann aber auch ein nicht angetriebenes Fahrzeug, beispielsweise ein Anhänger sein. Obwohl es eine Vielzahl unterschiedlicher Anwendungen gibt, die von der vorliegenden Erfindung umfasst sind, sollen im Folgenden Raupenfahrzeuge zur Durchführung landwirtschaftlicher Arbeit, hier als landwirtschaftliche Raupenfahrzeuge bezeichnet, im Vordergrund stehen. Nur beispielhaft erwähnt seien Traktoren und selbstfahrende Erntemaschinen wie Mähdrescher oder Feldhäcksler.

Fahrzeuge dieser Art können als Raupenfahrzeug oder Halbraupenfahrzeug ausgebildet sein. Diese weisen ein Raupenfahrwerk mit mindestens einem Raupenschiff, insbesondere mit mindestens zwei bezogen auf die Fahrzeuglängsachse (Fahrtrichtung) gegenüberliegenden Raupenschiffen, auf. Die Raupenschiffe weisen wiederum jeweils mehrere Rollen auf, die über ein umlaufendes Bodeneingriffsmittel in Form eines Raupenbandes (Laufbandes) oder einer Raupenkette (Gleiskette) miteinander verbunden sind. Beispielsweise sind Raupenschiffe bekannt, die eine vom Fahrantrieb angetriebene Antriebsrolle, eine Führungsrolle und dazwischenliegende Laufrollen aufweisen. In einer anderen Variante, dem sogenannten Dreieckslaufwerk, weist das Raupenschiff zwei Führungsrollen und ein mittig darüber angeordnetes Antriebsrad auf. Im Vordergrund soll hier die Variante eines Fahrzeugs mit einem Raupenlaufband stehen.

Raupenfahrwerke werden oft an landwirtschaftlichen Fahrzeugen eingesetzt, die eine hohe Achsbelastung haben. Bei Straßenfahrt werden die Außenstollen der Raupenbänder bzw. bei Raupenketten die Kettenpolster einer hohen Temperaturbelastung ausgesetzt, weil sie, wenn sie sich unterhalb der Laufrollen befinden, wiederholt komprimiert und entlastet werden und aufgrund des harten Straßenbelags nicht in den Boden ausweichen können. Durch die eingebrachte Energie werden die Außenstollen heiß. Bei hohen Umgebungstemperaturen und langer Fahrzeit kann die Temperatur in den Außenstollen so weit ansteigen, dass sie "aufkochen". Der dadurch entstehende Wulst führt dann zu einem stark ansteigenden Verschleiß des jeweiligen Raupenbandes. Darüber hinaus verschleißen die Außenstollen aufgrund des abrasiven Straßenbelags vergleichsweise schnell. Eine hohe Temperatur macht das Gummimaterial weicher und wirkt daher verschleißfördernd. Dieser nachteilige Effekt tritt häufig gerade bei Transportfahrten und einer hohen spezifischen Belastung der Raupenbänder auf, was die Verschleißkosten für den Endkunden signifikant erhöht.

Das landwirtschaftliche Fahrzeug (US 6,044,313 A), von dem die Erfindung ausgeht, ist als Offroad-Großmuldenkipper zum Abtransport von Abraumaterial ausgestaltet. Dieser weist ein Radfahrwerk auf, welches mehrere Fahrwerksräder aufweist, die großvolumige Reifen als Bodeneingriffsmittel aufweisen. Bei diesem landwirtschaftlichen Fahrzeug beruht eine Abschätzung des Verschleißes der Bodeneingriffsmittel auf ermittelten Tonnenmeilen pro Stunde, welche mit einer Temperatur der Reifen in Beziehung stehen. Durch das Speichern solcher Daten über ein gewisses Zeitintervall kann auch eine Verschleißentwicklung erfasst werden, die auch eine Abschätzung der Restlebensdauer erlaubt. Aus der DE 11 2008 003 244 T5 ist es außerdem bekannt, durch ein Nutzlaststeuersystem basierend auf fahrzeugseitigen Kraft- und Geschwindigkeitssensoren eine Geschwindigkeitsgrenze zur Verschleißreduzierung der Reifen anzupassen. Nachteilig bei all diesen Systemen ist allerdings, dass fahrzeugseitig Sensoren vorhanden sein oder eingerüstet werden müssen und das System damit fahrzeuggebunden ist.

Aus dem Stand der Technik ist es auch bekannt, Temperatursensoren in den Bodeneingriffsmitteln vorzusehen, die drahtlos ein Temperatursignal übermitteln, welches als Fahrerinformation oder zur Regelung der Maschine verwendet werden kann, um einen kritischen Betriebszustand zu vermeiden. Solche Sensoren im Bodeneingriffsmittel, beispielsweise im Raupenband, bedeuten aber zusätzliche Herstellkosten, zumal die Fertigungstechnologie zur Einbringung in das Gummimaterial nicht einfach ist. Darüber hinaus sind die Sensoren in kritischen Umgebungsbedingungen eingesetzt (extreme Temperaturen, Vibrationen), die das Ausfallrisiko erhöhen. Weiterhin sind die Umgebungsbedingungen für eine drahtlose Übertragung eines Sensorsignals auch nicht ideal.

Aus der WO 2015/110841 A1 ist es weiterhin bekannt, die Profiltiefe eines Fahrzeugreifens mittels eines mobilen Geräts anhand der Auswertung eines Fotos zu ermitteln.

Aus der WO 2017/049393 A1 und der WO 2017/000068 A1 sind weiterhin Raupenfahrzeuge gemäß dem Oberbegriff von Anspruch 1 bekannt.

Der Erfindung liegt das Problem zugrunde, das bekannte Raupenfahrzeug derart auszugestalten und weiterzubilden, dass eine Betriebszustandserfassung und/oder Lebensdauerbestimmung der Bodeneingriffsmittel optimiert wird.

Das obige Problem wird bei einem Raupenfahrzeug gemäß dem Oberbegriff von Anspruch 1 durch die Merkmale des kennzeichnenden Teils von Anspruch 1 gelöst.

Der vorschlagsgemäßen Lösung liegt die grundsätzliche Überlegung zugrunde, dass eine Betriebszustandserfassung eines oder mehrerer der Bodeneingriffsmittel basierend auf Parametern erfolgt, die sich unabhängig vom Fahrzeug, also ohne die Notwendigkeit fahrzeugeigener Sensoren, ermitteln lassen. Dazu zählen Zustandsgrößen der Umgebung (Umgebungsparameter) und/oder ohne fahrzeugeigene Sensoren ermittelbare Betriebsparameter, beispielsweise die Fahrzeuggeschwindigkeit oder die GPS- oder Geoposition, um nur einige Beispiele zu nennen. Indem solche Parameter zur Ermittlung des Betriebszustands herangezogen werden, lässt sich auf diese Weise eine Betriebszustandserfassung von Bodeneingriffsmitteln fahrzeugunabhängig durchführen. Werden Betriebszustände regelmäßig erfasst, lässt sich darüber auch die restliche Lebensdauer der Bodeneingriffsmittel bestimmen.

Im Einzelnen wird vorgeschlagen, dass eine Auswertevorrichtung vorgesehen ist, welche konfiguriert ist, einen Betriebszustand mindestens eines der Bodeneingriffsmittel basierend zumindest auf einer oder mehreren Zustandsgrößen der Umgebung und fahrzeugunabhängigen, auswertvorrichtungseigenen Sensordaten zu ermitteln. Der Betriebszustand bzw. Verschleißzustand lässt sich beispielsweise anhand des jeweils befahrenen Untergrunds (Straße, Feld oder dergleichen), der Geschwindigkeit, der Fahrdauer, der Umgebungstemperatur etc. ermitteln, um nur einige Beispiele zu nennen. "Fahrzeugunabhängig" meint hier, dass die Sensordaten nicht von fahrzeugeigenen Sensoren, sondern von auswertvorrichtungseigenen Sensoren, das heißt Sensoren der Auswertevorrichtung, erzeugt werden.

Die vorschlagsgemäße Lösung ist auf alle Arten von Fahrwerken anwendbar, beispielsweise auf Raupenfahrwerke, Radfahrwerke oder Kombinationen davon, insbesondere Halbraupenfahrwerke. Entsprechend kann es sich bei den Bodeneingriffsmitteln um Raupenbänder (Laufbänder), Raupenketten und/oder Reifen handeln. Im Vordergrund soll im Folgenden aber ein ein Raupenfahrwerk umfassendes Fahrwerk mit Raupenbändern stehen. Das jeweilige Fahrwerk, insbesondere Raupenfahrwerk, kann ferner ein angetriebenes Fahrwerksrad aufweisen, kann aber auch antriebslos sein, beispielsweise im Falle eines Anhängers. Entsprechend kann das Raupenfahrzeug mit oder ohne Fahrantrieb für die Erzeugung eines Vortriebs ausgestattet sein.

Erfindungsgemäß handelt es sich bei der Auswertevorrichtung um eine mobile Auswertevorrichtung, also eine Auswertevorrichtung, die nicht zwingend fest mit dem Fahrzeug verbunden ist. Eine mobile Auswertevorrichtung ist insbesondere ein Smartphone, ein Tablet-Computer, ein Notebook oder dergleichen. Ein wesentlicher Vorteil hierbei ist, dass eine solche Auswertevorrichtung von jeder Bedienperson mitgeführt werden kann, was insbesondere im Falle eines Smartphones heutzutage ohnehin üblich ist, wodurch die Auswertevorrichtung auch für unterschiedliche Raupenfahrzeuge, insbesondere landwirtschaftliche Raupenfahrzeuge, verwendet werden kann.

Erfindungsgemäß ist vorgesehen, dass die Zustandsgröße bzw. die Zustandsgrößen der Umgebung unmittelbar durch die Auswertevorrichtung ermittelt werden, indem diese von der Auswertevorrichtung beispielsweise aus dem Internet oder fahrzeugfernen Datenbanken (z.B. eines Hofrechners) abgerufen werden. Zustandsgrößen der Umgebung sind erfindungsgemäß die Umgebungstemperatur und/oder Wetterdaten (Regen, Trockenheit etc.).

Die fahrzeugunabhängig erzeugbaren Sensordaten werden nach der Ausgestaltung gemäß Anspruch 3 von mindestens einem Sensor der Auswertevorrichtung erzeugt. Solche fahrzeugunabhängigen Sensordaten sind gemäß Anspruch 4 beispielsweise die Fahrzeuggeschwindigkeit, die GPS- oder Geoposition (Straße, Feld etc.) des Fahrzeugs und/oder Beschleunigungsdaten (G-Kräfte bei Kurvenfahrten, beim Anfahren und/oder beim Abbremsen) des Fahrzeugs. Die Auswertevorrichtung kann entsprechend einen Geschwindigkeitssensor, einen GPS-Sensor und/oder einen Beschleunigungssensor aufweisen.

Nach der weiter bevorzugten Ausgestaltung gemäß Anspruch 5 erlaubt die Auswertevorrichtung auch die bedienerseitige Eingabe fahrzeugspezifischer Daten und/oder von Zustandsgrößen der Umgebung. Zusätzlich oder alternativ kann die Auswertevorrichtung auch konfiguriert sein, fahrzeugspezifische Daten und/oder Zustandsgrößen der Umgebung zu empfangen. Eine vorausgegangene entsprechende Datenerfassung kann beispielsweise über ein Fahrerassistenzsystem des Fahrzeugs oder auch über die mobile Auswertevorrichtung, vorzugsweise in Form eines Smartphones oder dergleichen, erfolgt sein. Dazu ist es auch denkbar, die Auswertevorrichtung mit einer entsprechenden Anwendungssoftware, insbesondere einer mobilen App, auszustatten, die Wetterdaten, GPS-Positionen, Geodaten etc. auswertet. Fahrzeugspezifische Daten, die über die Auswertevorrichtung eingebbar und/oder von dieser empfangbar sind, sind gemäß Anspruch 6 beispielsweise der Fahrzeugtyp, die jeweilige Achslast, das Alter des jeweiligen Bodeneingriffsmittels, die Profiltiefe bzw. Stollenhöhe des jeweiligen Bodeneingriffsmittels und/oder die Breite der innenseitigen Führungsblöcke (Führungszähne) des jeweiligen Bodeneingriffsmittels etc.

Nach der weiteren Ausgestaltung gemäß Anspruch 7 können zur Ermittlung des Betriebszustands des jeweiligen Bodeneingriffsmittels grundsätzlich auch fahrzeugeigene Sensordaten herangezogen werden. Es ist aber bevorzugt, die Ermittlung des Betriebszustands möglichst ausschließlich auf Parameter zu stützen, die unabhängig von fahrzeugeigenen Sensoren ermittelt werden können.

In den Ansprüchen 8 bis 10 sind bevorzugte Möglichkeiten definiert, wie sich die ermittelten Betriebszustände weiter nutzen lassen. So können dem jeweils ermittelten Betriebszustand entsprechende Fahrerinformationen angezeigt werden und/oder eine Regelung des Fahrzeugs, beispielsweise der Fahrzeuggeschwindigkeit, erfolgen. Eine solche Regelung erfolgt insbesondere automatisch, das heißt ohne die Notwendigkeit bedienerseitiger Eingriffe, über ein Fahrerassistenzsystem des Raupenfahrzeugs. Die Fahrerinformationen können auch den Betriebszustand bzw. Verschleißgrad und/oder die Restlebensdauer und/oder Empfehlungen zur Fahrgeschwindigkeit und/oder Wartung umfassen (Anspruch 9). Besonders bevorzugt lassen sich bestimmte Fahrerinformationen, insbesondere der Betriebszustand bzw. Verschleißgrad, graphisch anzeigen, was insbesondere in Echtzeit mittels der sogenannten Augmented Reality erfolgen kann (Anspruch 10). Letzteres ermöglicht beispielsweise, mittels der Kamera einer mobilen Auswertevorrichtung, beispielsweise eines Smartphones, das jeweilige Bodeneingriffsmittel visuell zu erfassen, wobei gleichzeitig über das Prinzip der Augmented Reality der Verschleißgrad auf dem wiedergegebenen Bild visuell angezeigt wird, beispielsweise durch eine Einfärbung des dargestellten Bodeneingriffsmittels.

Nach der bevorzugten Ausgestaltung gemäß Anspruch 11 kann der jeweils ermittelte Betriebszustand in einem Speicher abgelegt werden. Insbesondere können die ermittelten Betriebszustände in dem Speicher gesammelt werden, wodurch die Auswertevorrichtung dann auf die Restlebensdauer schließen kann.

Die vorschlagsgemäße Lösung erlaubt besonders bevorzugt den Verzicht auf entsprechende Sensoren zur Ermittlung des Betriebszustands, die innerhalb des Bodeneingriffsmittels vorgesehen sind (Anspruch 12).

Nach einer weiteren Lehre gemäß Anspruch 13, der eigenständige Bedeutung zukommt, wird ein Verfahren zur Betriebszustandserfassung und/oder Lebensdauerbestimmung mindestens eines Bodeneingriffsmittels eines wie zuvor definierten Raupenfahrzeugs mittels einer mobilen Auswertevorrichtung beansprucht, bei dem einzelnen Fahrwerksrädern und/oder Einheiten aus mehreren Fahrwerksrädern eines als Raupenfahrwerk ausgebildeten Fahrwerks des Raupenfahrzeugs jeweils ein Bodeneingriffsmittel in Form eines Raupenbandes zugeordnet ist. Vorschlagsgemäß ist dabei vorgesehen, dass die mobile Auswertevorrichtung einen Betriebszustand mindestens eines der Bodeneingriffsmittel basierend zumindest auf einer oder mehreren Zustandsgrößen der Umgebung und fahrzeugunabhängigen, auswertvorrichtungseigenen Sensordaten ermittelt, wobei die mobile Auswertevorrichtung die mindestens eine Zustandsgröße der Umgebung ermittelt, wobei der Betriebszustand ein Verschließgrad des Bodeneingriffsmittels ist, wobei als Zustandsgröße(n) der Umgebung die Umgebungstemperatur und/oder Wetterdaten berücksichtigt wird/werden, wobei die gefahrene Strecke auf einem landwirtschaftlichen Feld in die Bestimmung des Betriebszustands einfließt, wobei die mobile Auswertevorrichtung die auswertvorrichtungseigenen Sensordaten ohne fahrzeugeigene Sensoren ermittelt.

Im Folgenden wird die Erfindung anhand einer lediglich Ausführungsbeispiele darstellenden Zeichnung näher erläutert. In der Zeichnung zeigt
- Fig. 1: ein vorschlagsgemäßes Raupenfahrzeug in Form eines landwirtschaftlichen Fahrzeugs mit einem Halbraupenfahrwerk und einer mobilen Auswertevorrichtung,
- Fig. 2: eine Darstellung von Fahrerinformationen gemäß einem ersten Ausführungsbeispiel,
- Fig. 3: eine Darstellung von Fahrerinformationen gemäß einem zweiten Ausführungsbeispiel,
- Fig. 4: eine Darstellung von Fahrerinformationen gemäß einem dritten Ausführungsbeispiel und
- Fig. 5: eine Darstellung von Fahrerinformationen gemäß einem vierten Ausführungsbeispiel.

Das vorschlagsgemäße Raupenfahrzeug, das hier beispielhaft als landwirtschaftliches Raupenfahrzeug 1 ausgebildet ist, kann ganz unterschiedlich ausgestaltet sein. Beispielsweise kann es sich bei dem landwirtschaftlichen Fahrzeug 1 um einen Traktor, um eine selbstfahrende Erntemaschine, wie einen Mähdrescher oder einen Feldhäcksler, oder um einen angetriebenen oder nicht angetriebenen Anhänger handeln. Die Vorzüge der vorschlagsgemäßen Lösung zeigen sich besonders deutlich bei Raupenfahrzeugen oder Halbraupenfahrzeugen mit einem Raupenfahrwerk. Bei dem dargestellten und insoweit bevorzugten Ausführungsbeispiel handelt es sich bei dem landwirtschaftlichen Fahrzeug 1 um einen Mähdrescher mit Halbraupenfahrwerk, wie noch erläutert wird.

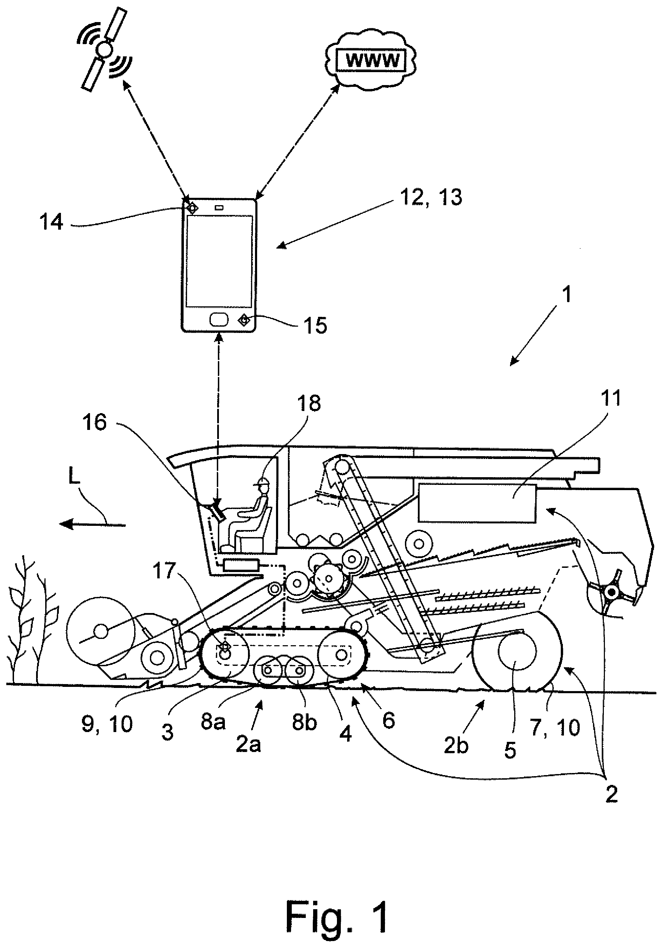

Das Fahrwerk 2 des hier beispielhaft beschriebenen landwirtschaftlichen Fahrzeugs 1 weist hier und vorzugsweise mindestens zwei bezogen auf die Fahrzeuglängsachse bzw. Fahrtrichtung L gegenüberliegende Fahrwerksräder 3 - 5 auf. In der Ansicht in Fig. 1 sind nur die linken Fahrwerksräder 3 - 5 zu erkennen. Bezogen auf die Fahrzeuglängsachse bzw. Fahrtrichtung L liegen diesen Fahrwerksrädern 3 - 5 entsprechende Fahrwerksräder 3 - 5 gegenüber. Dabei sind die Fahrwerksräder 3, 4 Bestandteil eines Raupenfahrwerks 2a und die Fahrwerksräder 5 Bestandteil eines Radfahrwerks 2b. Entsprechend laufen die Fahrwerksräder 3, 4 in zugeordneten Raupenschiffen 6, wohingegen die Fahrwerksräder 5 über Reifen 7 auf dem Boden abrollen. Der Begriff "Fahrwerksrad" ist vorliegend also weit zu verstehen. Er umfasst sowohl Räder, die einem Raupenfahrwerk 2a zugeordnet sind und in entsprechenden Raupenschiffen 6 laufen, als auch Räder, die einem Radfahrwerk 2b zugeordnet sind und jeweils mit einem Reifen 7 versehen sind. Es sei angemerkt, dass, obwohl hier von mehreren Raupenschiffen 6 die Rede ist, es allgemein auch denkbar ist, nur ein einzelnes Raupenschiff 6 vorzusehen.

Das Raupenfahrwerk 2a weist hier zwei bezogen auf die Fahrzeuglängsachse bzw. Fahrtrichtung L gegenüberliegende Raupenschiffe 6 auf, die hier und vorzugsweise jeweils ein vorderes Fahrwerksrad 3 als Führungsrad bzw. Führungsrolle, ein hinteres Fahrwerksrad 4 als Antriebsrad bzw. Antriebsrolle und hier und vorzugsweise zwei dazwischenliegende Laufräder bzw. Laufrollen 8a, 8b aufweisen. Die Raupenschiffe 6 weisen darüber hinaus jeweils ein Raupenband 9 auf, das die Fahrwerksräder 3, 4 und Laufräder bzw. Laufrollen 8a, 8b verbindet. Die Laufräder bzw. Laufrollen 8a, 8b halten den unteren Strang des jeweiligen Raupenbandes 9 in durchgehendem Bodenkontakt, so dass sich eine gleichmäßige Gewichtsverteilung über die gesamte Kontaktfläche zwischen dem Boden und dem jeweiligen Raupenband 9 ergibt. Grundsätzlich sind auch andere Arten von Raupenschiffen denkbar, die beispielsweise eine Dreiecksform mit zwei den durchgehenden Bodenkontakt herstellenden Führungsrollen und einer mittig darüber angeordneten Antriebsrolle aufweisen (Dreieckslaufwerk).

Die Reifen 7 und die Raupenbänder 9 bilden hier jeweils ein Bodeneingriffsmittel 10. Die vorschlagsgemäße Lösung ist alternativ zu einem Raupenband 9 als Bodeneingriffsmittel 10, womit hier ein Laufband aus mehreren mit Gummi umspritzten Lagen aus Gewebe und Stahl gemeint ist, auch auf eine Raupenkette bzw. Gleiskette mit mehreren stählernen Laufflächengliedern, die mit Gummipolstern versehen sein können, anwendbar.

Weiter ist ist hier und vorzugsweise ein Fahrantrieb 11 für die Erzeugung eines Vortriebs des landwirtschaftlichen Fahrzeugs 1 vorgesehen, der aber bei der vorschlagsgemäßen Lösung nicht zwingend ist, beispielsweise bei einem nicht angetriebenen Anhänger. Bei dem hier dargestellten Ausführungsbeispiel sind jedenfalls die Fahrwerksräder 4 durch den Fahrantrieb 11 antreibbar. Grundsätzlich ist es auch denkbar, dass zusätzlich oder alternativ die Fahrwerksräder 3 des Raupenfahrwerks 2a oder alle Fahrwerksräder 3 - 5 des landwirtschaftlichen Fahrzeugs 1 insgesamt durch den Fahrantrieb 11 antreibbar sind.

Wesentlich ist nun, dass eine Auswertevorrichtung 12 vorgesehen ist, welche konfiguriert ist, einen Betriebszustand mindestens eines der Bodeneingriffsmittels 10, erfindungsgemäß des Raupenbandes 9, zu ermitteln, und zwar basierend auf Zustandsgrößen der Umgebung und basierend zumindest auf fahrzeugunabhängigen, auswertvorrichtungseignen Sensordaten. Der "Betriebszustand" bezeichnet hier und vorzugsweise den Verschleißgrad des jeweiligen Bodeneingriffsmittels 10. Da Zustandsgrößen der Umgebung genauso wie die auswertvorrichtungseigene, das heißt von der Auswertevorrichtung 12 selbst erzeugte Sensordaten, ohne fahrzeugeigene Sensoren ermittelt bzw. erzeugt werden können, kann ein Betriebszustand des jeweiligen Bodeneingriffsmittels 10 unabhängig vom Fahrzeug 1 selbst ermittelt werden. Dabei handelt es sich bei der Auswertevorrichtung 12 erfindungsgemäß um eine mobile Auswertevorrichtung 12, hier beispielsweise um ein Smartphone 13. Eine solche Auswertevorrichtung führt die Bedienperson 18 ohnehin üblicherweise bei sich, so dass die Ermittlung des Betriebszustands des jeweiligen Bodeneingriffsmittels 10 damit für jedes von der Bedienperson 18 bedienbare landwirtschaftliche Fahrzeug 1, insbesondere jedes landwirtschaftliche Fahrzeug 1 eines Betriebskollektivs, erfolgen kann.

Alternativ zu dem in Fig. 1 dargestellten Smartphone 13 kann als Auswertevorrichtung 12, insbesondere mobile Auswertevorrichtung 12, beispielsweise auch ein Tablet-Computer, Notebook oder dergleichen vorgesehen sein. Vorzugsweise weist die Auswertevorrichtung 12, insbesondere die mobile Auswertevorrichtung 12, eine Tastatur und/oder einen Bildschirm auf, wobei besonders bevorzugt ein Touchscreen, insbesondere mit virtuellen Bedienelementen, vorgesehen ist.

Die Zustandsgröße oder Zustandsgrößen der Umgebung wird bzw. werden erfindungsgemäß von der Auswertevorrichtung 12, hier dem Smartphone 13, ermittelt. Das Ermitteln der Zustandsgrößen erfolgt insbesondere durch Abrufen entsprechender Informationen aus dem Internet, hier mit "www" symbolisiert. Erfindungsgemäß sind solche Zustandsgrößen der Umgebung die Umgebungstemperatur am Standort des Raupenfahrzeugs 1 und/oder die dortigen Wetterdaten. Diese Zustandsgrößen sind besonders wichtig bei der Ermittlung des Betriebszustands des jeweiligen Bodeneingriffsmittels 10, da sowohl durch die Temperatur als auch durch das Wetter bzw. die Feuchtigkeit oder Trockenheit der Verschleiß beeinflusst wird. Bei hohen Temperaturen kann die Temperatur der Außenstollen des Raupenfahrwerks 2a so weit ansteigen, dass diese, besonders bei langer Fahrzeit auf hartem Straßenbelag, aufkochen bzw. vulkanisieren. Dadurch kann ein Wulst entstehen, der den Verschleiß zusätzlich steigert.

Zusätzlich zum Ermitteln von Zustandsgrößen der Umgebung ist die Auswertevorrichtung 12 hier und vorzugsweise auch mit Sensoren 14, 15 versehen, mit denen sich die besagten auswertvorrichtungseigenen Sensordaten erzeugen lassen. So handelt es sich hier bei den Sensoren um einen GPS-Sensor 14 und einen Beschleunigungssensor 15. Darüber lassen sich hier und vorzugsweise die Fahrzeuggeschwindigkeit, die GPS-Position, Geodaten und/oder Beschleunigungsdaten des Raupenfahrzeugs 1 ermitteln. Es ist auch denkbar, eine Auswertevorrichtung 12 vorzusehen, die einen eigenen Geschwindigkeitssensor aufweist, der die Geschwindigkeit des Fahrzeugs 1 unmittelbar ermittelt und nicht wie hier über die Veränderung der GPS-Position. Die so erzeugten Sensordaten sind für die Ermittlung des Betriebszustands des jeweiligen Bodeneingriffsmittels 10 ebenfalls relevant, da die Fahrzeuggeschwindigkeit, der über die Fahrzeugposition ermittelbare Fahrbahnbelag und die Beschleunigung des Fahrzeugs 1 beim Anfahren oder Abbremsen oder bei Kurvenfahrt ebenfalls den Verschleiß des jeweiligen Bodeneingriffsmittels 10 und insbesondere der Außenstollen des jeweiligen Raupenbands 9 beeinflussen. So wirken Straßenbeläge deutlich abrasiver als die Bodenoberfläche landwirtschaftlicher Wege oder eines landwirtschaftlichen Feldes. Auch steigert sich der Verschleiß durch hohe Geschwindigkeiten und hohe Beschleunigungswerte.

Weiter ist die Auswertevorrichtung 12 hier konfiguriert zur bedienerseitigen Eingabe sowie hier und vorzugsweise auch zum Empfang fahrzeugspezifischer Daten. Fahrzeugspezifische Daten wie der Fahrzeugtyp, die Achslast, das Alter des jeweiligen Bodeneingriffsmittels 10 bzw. Raupenbandes 9, die Profiltiefe bzw. Höhe der Außenstollen des jeweiligen Bodeneingriffsmittels 10 und/oder die Breite der innenseitigen Führungsblöcke bzw. -zähne des jeweiligen Bodeneingriffsmittels 10 sind ebenfalls Parameter, die den Betriebszustand des jeweiligen Bodeneingriffsmittels 10 charakterisieren. Die entsprechenden Daten können hier und vorzugsweise bedienerseitig über die Auswertevorrichtung 12 bzw. das Smartphone 13 eingegeben werden, können von dieser aber auch von einem Fahrerassistenzsystem 16 des hier landwirtschaftlichen Raupenfahrzeugs 1 empfangen werden. Ein solches Fahrerassistenzsystem 16 kann beispielsweise die Achslast über einen entsprechenden Sensor 17 ermitteln und die Werte dann an die Auswertevorrichtung 12, hier das Smartphone 13, weiterleiten. Auch der Fahrzeugtyp kann beispielsweise von einem entsprechenden Fahrerassistenzsystem 16 an die Auswertevorrichtung 12, insbesondere automatisch, übermittelt werden.

Grundsätzlich können, neben dem hier optional erwähnten Achslastsensor 17, auch andere fahrzeugeigene Sensoren (hier nicht dargestellt) vorgesehen sein, deren Sensordaten bei der Ermittlung des Betriebszustands des jeweiligen Bodeneingriffsmittels 10 berücksichtigt werden können. Besonders bevorzugt weisen aber die Bodeneingriffsmittel 10 selbst keine eigenen Sensoren auf, die zur Bestimmung des jeweiligen Betriebszustands dienen. Schließlich können auch Daten über externe Datenbanken, beispielsweise Daten von einem Hofrechner oder dergleichen, Berücksichtigung finden.

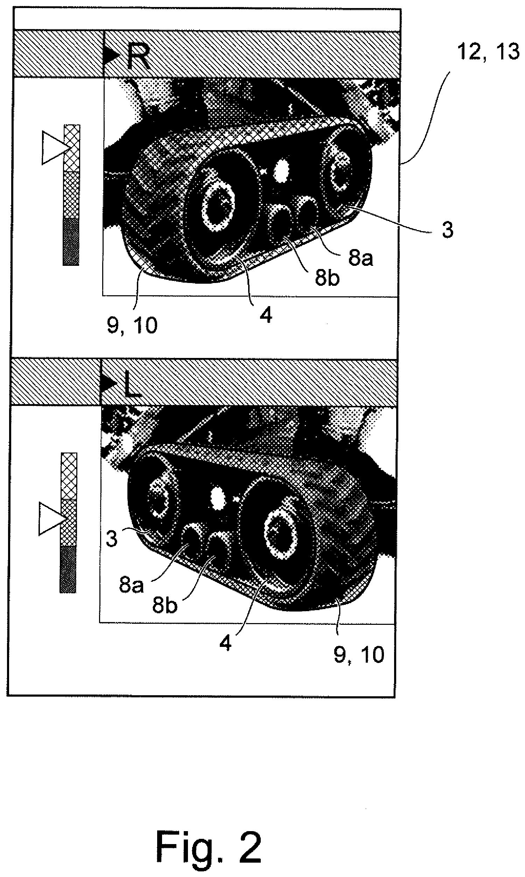

Basierend auf dem ermittelten Betriebszustand des jeweiligen Bodeneingriffsmittels 10 kann die Auswertevorrichtung 12 nun hier und vorzugsweise eine oder mehrere Fahrerinformationen anzeigen, was anhand verschiedener Ausführungsbeispiele in den Figuren 2 - 5 dargestellt ist. Die Auswertevorrichtung 12 kann auch konfiguriert sein, eine Anzeige solcher Fahrerinformationen im Fahrerassistenzsystem 16 zu bewirken. Weiter kann vorgesehen sein, dass die Auswertevorrichtung 12 eine insbesondere automatische Regelung des Raupenfahrzeugs 1, insbesondere dessen Geschwindigkeit, bewirkt, was ebenfalls mittels des Fahrerassistenzsystems 16 des Raupenfahrzeugs 1 bewerkstelligt werden kann. Dazu kann die insbesondere mobile Auswertevorrichtung 12, vorzugsweise drahtlos, mit dem Fahrerassistenzsystem 16 des Fahrzeugs 1 kommunizieren.

In Fig. 2 ist nun beispielhaft eine Augmented Reality-basierte Visualisierung eines Betriebszustands bzw. Verschleißgrads des jeweiligen Bodeneingriffsmittels 10, hier des Raupenbands 9, auf dem in Fig. 1 gezeigten Smartphone 13 dargestellt. Die Visualisierung des Verschleißgrads erfolgt hier bevorzugt über eine Einfärbung des realen Bildes des jeweiligen Bodeneingriffsmittels 10 bzw. Raupenbandes 9 in Echtzeit. Die visuelle Darstellung erfolgt hier über die vorrichtungseigene Kamera der Auswertevorrichtung 12 bzw. des Smartphones 13. Die Bedienperson 18 muss lediglich, nachdem ein entsprechendes Computerprogramm bzw. eine entsprechende mobile App zur Betriebszustandserfassung und/oder Lebensdauerbestimmung auf der Auswertevorrichtung 12 aufgerufen worden ist, die vorrichtungseigene Kamera auf das jeweilige Bodeneingriffsmittel 10 bzw. Raupenband 9 richten, woraufhin die Software die jeweilige Einfärbung des Bodeneingriffsmittels 10 bzw. Raupenbandes 9 in Echtzeit vornimmt. Die Einfärbung wird hier und vorzugsweise in Abhängigkeit des Verschleißgrads gewählt. Beispielsweise erfolgt, wenn kein Verschleiß oder jedenfalls ein unkritischer Verschleiß vorliegt, eine grüne Einfärbung, wohingegen bei einem hohen Verschleißgrad bzw. einem kritischen Verschleiß eine rote Einfärbung erfolgt. Auch mindestens eine Zwischenstufe, beispielsweise symbolisiert durch eine gelbe Einfärbung, ist denkbar, wenn der Verschleiß zwar noch nicht kritisch ist, aber eine kurzfristige Wartung empfohlen wird. Bei dem Ausführungsbeispiel in Fig. 2 wird beispielsweise in der oberen Ansicht ein kritischer Verschleißgrad des rechten Raupenbandes 9 angezeigt, wohingegen in der unteren Ansicht ein mittlerer Verschleißgrad des linken Raupenbandes 9 angezeigt wird.

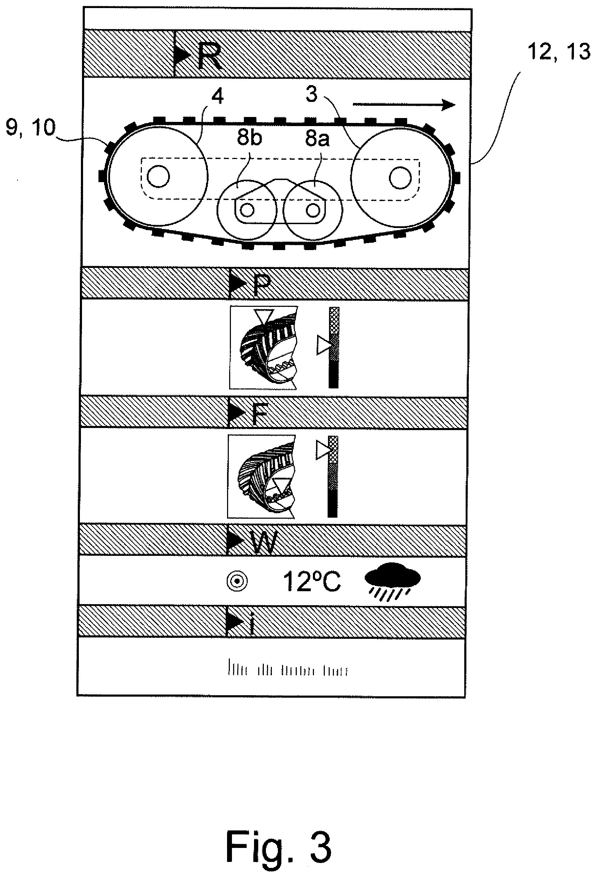

Alternative oder zusätzliche Fahrerinformationen mit weiteren Details sind in den Figuren 3 - 5 dargestellt.

In Fig. 3 wird beispielsweise, ebenfalls in Echtzeit, allerdings nicht am realen Bild, der Verschleißgrad für das rechte Raupenband 9 graphisch dargestellt, und zwar zum einen für die Profiltiefe der Außenstollen (Ansicht P) und zum anderen für die Breite der radial innenliegenden Führungsblöcke bzw. Führungszähne (Ansicht F). Der Verschleiß der Außenstollen liegt hier in einem mittleren Bereich, wohingegen der Verschleiß der Führungsblöcke bzw. -zähne unkritisch ist. Zusätzlich ist eine Ansicht W vorgesehen, in der Informationen über die Umgebungstemperatur und das Wetter für den aktuellen Standort angezeigt werden. In noch einer weiteren Ansicht i können noch weitere Informationen, insbesondere textbasiert, angezeigt werden, beispielsweise Empfehlungen für eine bevorzugte Fahrgeschwindigkeit und/oder eine anstehende Wartung. Grundsätzlich können neben dem Verschleißgrad auch Angaben zur Restlebensdauer angezeigt werden.

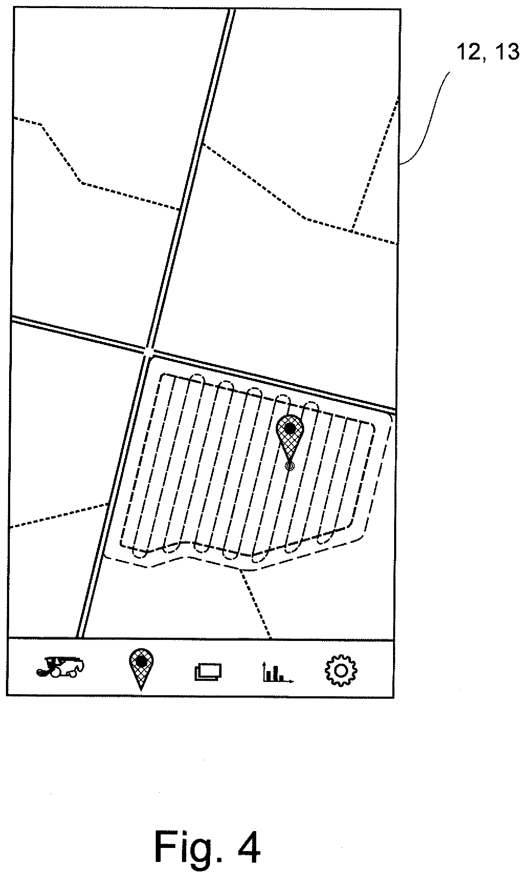

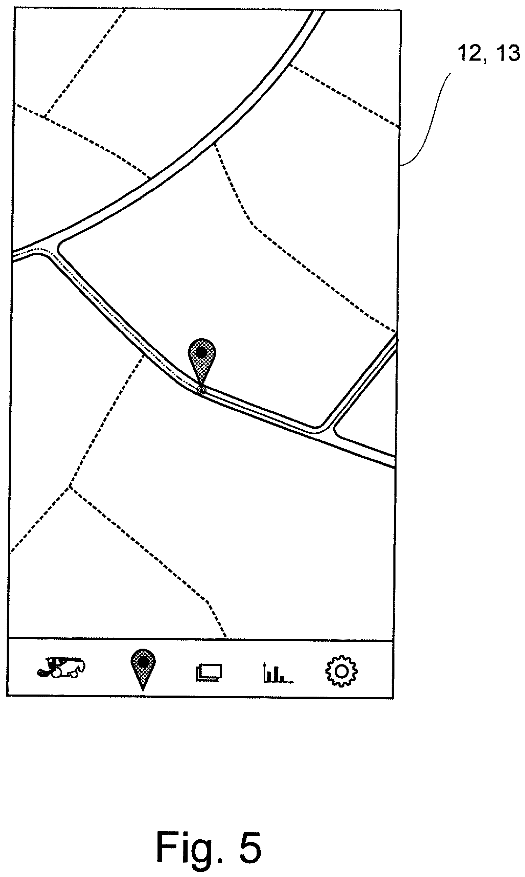

In Fig. 4 ist als weitere Fahrerinformation die GPS-Position des hier landwirtschaftlichen Raupenfahrzeugs 1 innerhalb eines landwirtschaftlichen Feldes dargestellt, wobei hier als Karte insbesondere eine aus dem Internet frei verfügbare Karte zugrunde gelegt wird. Ferner ist hier die gefahrene Strecke auf dem landwirtschaftlichen Feld dargestellt. Die gefahrene Strecke auf dem landwirtschaftlichen Feld fließt wiederum erfindungsgemäß in die Bestimmung des Betriebszustands ein. In Fig. 5 ist als Fahrerinformation die GPS-Position des landwirtschaftlichen Fahrzeugs 1 auf einer Straße dargestellt. Hier ist zusätzlich die gefahrene Strecke auf der Straße dargestellt. Auch diese fließt in die Bestimmung des Betriebszustands ein.

Die entsprechend der vorschlagsgemäßen Lösung ermittelten Betriebszustände werden alle in einem Speicher (nicht dargestellt) abgelegt und insbesondere gesammelt. Der Speicher kann Bestandteil der Auswertevorrichtung 12 oder des Fahrerassistenzsystem 16 des Raupenfahrzeugs 1 oder ein externer Speicher, z.B. eines Hofrechners, sein. Insbesondere handelt es sich bei dem Speicher um einen Speicher eines Betriebskollektivs, der auch entsprechende Betriebszustandsdaten anderer landwirtschaftlicher Fahrzeuge enthält.

### Bezugszeichenliste

- 1: Raupenfahrzeug
- 2: Fahrwerk
- 2a: Raupenfahrwerk
- 2b: Radfahrwerk
- 3-5: Fahrwerksräder
- 6: Raupenschiffe
- 7: Reifen
- 8a, 8b: Laufräder
- 9: Raupenband
- 10: Bodeneingriffsmittel
- 11: Fahrantrieb
- 12: Auswertevorrichtung
- 13: Smartphone
- 14: GPS-Sensor
- 15: Beschleunigungssensor
- 16: Fahrerassistenzsystem
- 17: Achslastsensor
- 18: Bedienperson
- L: Fahrtrichtung

## Patentansprüche

1. Raupenfahrzeug, insbesondere landwirtschaftliches Raupenfahrzeug, mit einer mobilen Auswertevorrichtung (12) und einem als Raupenfahrwerk (2a) ausgebildeten Fahrwerk (2) mit mindestens zwei Fahrwerksrädern (3, 4, 5), wobei Einheiten aus mehreren Fahrwerksrädern (3, 4) Bodeneingriffsmittel (10) in Form eines Raupenbandes (9) zugeordnet sind,
**dadurch gekennzeichnet,**
**dass** die mobile Auswertevorrichtung (12) konfiguriert ist, einen Betriebszustand des Raupenbandes (9) basierend zumindest auf einer oder mehreren Zustandsgrößen der Umgebung und fahrzeugunabhängigen, auswertvorrichtungseigenen Sensordaten zu ermitteln, wobei die mobile Auswertevorrichtung (12) konfiguriert ist, die mindestens eine Zustandsgröße der Umgebung zu ermitteln, wobei der Betriebszustand ein Verschleißgrad des Bodeneingriffsmittels (10) ist, wobei als Zustandsgröße(n) der Umgebung die Umgebungstemperatur und/oder Wetterdaten berücksichtigt wird/werden, wobei die gefahrene Strecke auf einem landwirtschaftlichen Feld in die Bestimmung des Betriebszustands einfließt, wobei die mobile Auswertevorrichtung (12) dazu eingerichtet ist, die auswertvorrichtungseigenen Sensordaten ohne fahrzeugeigene Sensoren zu ermitteln.

2. Raupenfahrzeug nach Anspruch 1, **dadurch gekennzeichnet, dass** die mobile Auswertevorrichtung (12) ein Smartphone (13), Tablet-Computer, Notebook oder dergleichen ist, und/oder, dass die mobile Auswertevorrichtung (12) eine Tastatur und/oder einen Bildschirm und/oder einen Touchscreen aufweist.

3. Raupenfahrzeug nach einem der vorhergehenden Ansprüche, **dadurch gekennzeichnet, dass** die mobile Auswertevorrichtung (12) mindestens einen Sensor (14, 15) zum Erzeugen der fahrzeugunabhängigen, auswertevorrichtungseigenen Sensordaten aufweist.

4. Raupenfahrzeug nach einem der vorhergehenden Ansprüche, **dadurch gekennzeichnet, dass** als fahrzeugunabhängige, auswertevorrichtungseigenen Sensordaten die Fahrzeuggeschwindigkeit, die GPS- oder Geoposition des Fahrzeugs (1) und/oder Beschleunigungsdaten des Fahrzeugs (1) ermittelt werden, und/oder, die mobile Auswertevorrichtung (12) einen Geschwindigkeitssensor, einen GPS-Sensor (14) und/oder einen Beschleunigungssensor (15) aufweist.

5. Raupenfahrzeug nach einem der vorhergehenden Ansprüche, **dadurch gekennzeichnet, dass** die mobile Auswertevorrichtung (12) konfiguriert ist zur bedienerseitigen Eingabe und/oder zum Empfang von fahrzeugspezifischen Daten und/oder der mindestens einen Zustandsgröße der Umgebung.

6. Raupenfahrzeug nach einem der vorhergehenden Ansprüche, **dadurch gekennzeichnet, dass** als fahrzeugspezifische Daten der Fahrzeugtyp, die Achslast des Fahrzeugs (1), das Alter des jeweiligen Bodeneingriffsmittels (10), die Profiltiefe des jeweiligen Bodeneingriffsmittels (10) und/oder die Breite der innenseitigen Führungsblöcke des jeweiligen Bodeneingriffsmittels (10) bedienerseitig eingebbar und/oder empfangbar sind.

7. Raupenfahrzeug nach einem der vorhergehenden Ansprüche, **dadurch gekennzeichnet, dass** zur Ermittlung des Betriebszustands ferner fahrzeugeigene Sensordaten berücksichtigt werden.

8. Raupenfahrzeug nach einem der vorhergehenden Ansprüche, **dadurch gekennzeichnet, dass** die mobile Auswertevorrichtung (12) konfiguriert ist, basierend auf dem ermittelten Betriebszustand eine Fahrerinformation anzuzeigen und/oder eine Anzeige einer Fahrerinformation in einem Fahrerassistenzsystem (16) des Fahrzeugs (1) zu bewirken und/oder eine Regelung des Fahrzeugs (1) über ein Fahrerassistenzsystem (16) des Fahrzeugs (1) zu bewirken.

9. Raupenfahrzeug nach Anspruch 8, **dadurch gekennzeichnet, dass** die Fahrerinformation den Betriebszustand und/oder die Restlebensdauer und/oder Empfehlungen zur Fahrgeschwindigkeit und/oder zur Wartung des jeweiligen Bodeneingriffsmittels (10) umfasst.

10. Raupenfahrzeug nach Anspruch 8 oder 9, **dadurch gekennzeichnet, dass** die Fahrerinformation graphisch und/oder mittels Augmented Reality angezeigt wird.

11. Raupenfahrzeug nach einem der vorhergehenden Ansprüche, **dadurch gekennzeichnet, dass** der jeweils ermittelte Betriebszustand in einem Speicher abgelegt und/oder gesammelt wird.

12. Raupenfahrzeug nach einem der vorhergehenden Ansprüche, **dadurch gekennzeichnet, dass** das/die Bodeneingriffsmittel (10), dessen/deren Betriebszustand ermittelt wird, frei von Sensoren ist/sind.

13. Verfahren zur Betriebszustandserfassung und/oder Lebensdauerbestimmung mindestens eines Bodeneingriffsmittels (10) eines Raupenfahrzeugs (1) nach einem der vorhergehenden Ansprüche mittels einer mobilen Auswertevorrichtung (12), wobei einzelnen Fahrwerksrädern (5) und/oder Einheiten aus mehreren Fahrwerksrädern (3, 4) eines als Raupenfahrwerk (2a) ausgebildeten Fahrwerks (2) des Fahrzeugs (1) jeweils ein Bodeneingriffsmittel (10) in Form eines Raupenbandes (9) zugeordnet ist,
**dadurch gekennzeichnet,**
**dass** die mobile Auswertevorrichtung (12) einen Betriebszustand des Raupenbandes (9) basierend zumindest auf einer oder mehreren Zustandsgrößen der Umgebung und fahrzeugunabhängigen, auswertvorrichtungseigenen Sensordaten ermittelt, wobei die mobile Auswertevorrichtung (12) die mindestens eine Zustandsgröße der Umgebung ermittelt, wobei der Betriebszustand ein Verschleißgrad des Bodeneingriffsmittels (10) ist, wobei als Zustandsgröße(n) der Umgebung die Umgebungstemperatur und/oder Wetterdaten berücksichtigt wird/werden, wobei die gefahrene Strecke auf einem landwirtschaftlichen Feld in die Bestimmung des Betriebszustands einfließt, wobei die mobile Auswertevorrichtung (12) die auswertvorrichtungseigenen Sensordaten ohne fahrzeugeigene Sensoren ermittelt.

## Claims

1. A crawler vehicle, in particular an agricultural crawler vehicle, with a mobile evaluation device (12) and a chassis (2) constructed as a crawler chassis (2a) with at least two chassis wheels (3, 4, 5), wherein units of a plurality of chassis wheels (3, 4) are associated with ground engaging means (10) in the form of a crawler belt (9),
**characterized in that**
the mobile evaluation device (12) is configured to determine an operating state of the crawler belt (9) based at least on one or more state variables of the environment and vehicle-independent, evaluation device-specific sensor data, wherein the mobile evaluation device (12) is configured to determine the at least one state variable of the environment, wherein the operating state is a degree of wear of the ground engaging means (10), wherein the environmental temperature and/or weather data is/are taken into consideration as the state variable(s) of the environment, wherein the route travelled on an agricultural field is incorporated into the determination of the operating state, wherein the mobile evaluation device (12) is configured to determine the evaluation device-specific sensor data without vehicle-specific sensors.

2. The crawler vehicle according to claim 1, **characterized in that** the mobile evaluation device (12) is a smartphone (13), a tablet computer, a notebook or the like, and/or **in that** the mobile evaluation device (12) has a keypad and/or a screen and/or a touchscreen.

3. The crawler vehicle according to one of the preceding claims, **characterized in that** the mobile evaluation device (12) has at least one sensor (14, 15) for generating the vehicle-independent, evaluation device-specific sensor data.

4. The crawler vehicle according to one of the preceding claims, **characterized in that** the vehicle speed, the GPS positioning or geopositioning of the vehicle (1) and/or acceleration data of the vehicle (1) are determined as the vehicle-independent, evaluation device-specific sensor data, and/or the mobile evaluation device (12) has a speed sensor, a GPS sensor (14) and/or an acceleration sensor (15).

5. The crawler vehicle according to one of the preceding claims, **characterized in that** the mobile evaluation device (12) is configured for input by an operator and/or for receiving vehicle-specific data and/or the at least one state variable of the environment.

6. The crawler vehicle according to one of the preceding claims, **characterized in that** the type of vehicle, the axle load of the vehicle (1), the age of the respective ground engaging means (10), the profile depth of the respective ground engaging means (10) and/or the width of the interior guiding blocks of the respective ground engaging means (10) can be input by the operator and/or can be received as the vehicle-specific data.

7. The crawler vehicle according to one of the preceding claims, **characterized in that** furthermore, vehicle-specific sensor data are taken into consideration in order to determine the operating state.

8. The crawler vehicle according to one of the preceding claims, **characterized in that** the mobile evaluation device (12) is configured for displaying an item of driver information and/or for producing a display of an item of driver information in a driver assistance system (16) of the vehicle (1) and/or for causing a regulation of the vehicle (1) via a driver assistance system (16) of the vehicle (1) based on the determined operating state.

9. The crawler vehicle according to claim 8, **characterized in that** the item of driver information comprises the operating state and/or remaining service life and/or recommendations for the driving speed and/or for maintenance of the respective ground engaging means (10).

10. The crawler vehicle according to claim 8 or claim 9, **characterized in that** the item of driver information is displayed graphically and/or by means of augmented reality.

11. The crawler vehicle according to one of the preceding claims, **characterized in that** the respectively determined operating state is stored and/or compiled in a memory.

12. The crawler vehicle according to one of the preceding claims, **characterized in that** the ground engaging means (10) the operating state of which is/are determined is/are free from sensors.

13. A method for detecting the operating state and/or for determining the service life of at least one ground engaging means (10) of a crawler vehicle (1) according to one of the preceding claims by means of at least one mobile evaluation device (12), wherein individual chassis wheels (5) and/or units of a plurality of chassis wheels (3, 4) of a chassis (2) constructed as a crawler chassis (2a) of the vehicle (1) are respectively associated with a ground engaging means (10) in the form of a crawler belt (9),
**characterized in that**
the mobile evaluation device (12) determines an operating state of the crawler belt (9) based at least on one or more state variables of the environment and vehicle-independent, evaluation device-specific sensor data, wherein the mobile evaluation device (12) determines the at least one state variable of the environment, wherein the operating state is a degree of wear of the ground engaging means (10), wherein the environmental temperature and/or weather data is/are taken into consideration as the state variable(s) of the environment, wherein the route travelled on an agricultural field is incorporated into the determination of the operating state, wherein the mobile evaluation device (12) determines the evaluation device-specific sensor data without vehicle-specific sensors.

## Revendications

1. Véhicule à chenilles, notamment véhicule à chenilles agricole, comprenant un dispositif d'évaluation (12) mobile et un train de roulement (2) réalisé sous forme de train de roulement à chenilles (2a), doté d'au moins deux roues de train de roulement (3, 4, 5), dans lequel des moyens de prise au sol (10), sous la forme d'une bande de chenille (9), sont associés à des unités constituées de plusieurs roues de train de roulement (3, 4, 5),
**caractérisé en ce que**
le dispositif d'évaluation (12) mobile est configuré pour déterminer un état de fonctionnement de la bande de chenille (9), sur la base d'au moins une ou plusieurs grandeurs d'état de l'environnement et données de capteur propres au dispositif d'évaluation et indépendantes du véhicule, le dispositif d'évaluation (12) mobile étant configuré pour déterminer la grandeur d'état de l'environnement, au nombre d'au moins une, l'état de fonctionnement étant un degré d'usure du moyen de prise au sol (10), où la température ambiante et/ou des données météorologiques est/sont prise(s) en compte en tant que grandeur(s) d'état de l'environnement, le trajet parcouru dans un champ agricole étant pris en compte dans la détermination de l'état de fonctionnement, le dispositif d'évaluation (12) mobile étant conçu pour déterminer les données de capteur propres au dispositif d'évaluation, sans capteurs propres au véhicule.

2. Véhicule à chenilles selon la revendication 1, **caractérisé en ce que** le dispositif d'évaluation (12) mobile est un smartphone (13), une tablette numérique, un ordinateur portable ou un dispositif analogue, et/ou **en ce que** le dispositif d'évaluation (12) mobile présente un clavier et/ou un écran et/ou un écran tactile.

3. Véhicule à chenilles selon une des revendications précédentes, **caractérisé en ce que** le dispositif d'évaluation (12) mobile présente au moins un capteur (14, 15) pour générer les données de capteur propres au dispositif d'évaluation et indépendantes du véhicule.

4. Véhicule à chenilles selon une des revendications précédentes, **caractérisé en ce que** l'on détermine en tant que données de capteur propres au dispositif d'évaluation et indépendantes du véhicule, la vitesse du véhicule, la position GPS ou géolocalisée du véhicule (1) et/ou des données d'accélération du véhicule (1), et/ou que le dispositif d'évaluation (12) mobile présente un capteur de vitesse, un capteur GPS (14) et/ou un capteur d'accélération (15).

5. Véhicule à chenilles selon une des revendications précédentes, **caractérisé en ce que** le dispositif d'évaluation (12) mobile est configuré pour la saisie côté utilisateur et/ou pour la réception de données spécifiques du véhicule et/ou de la grandeur d'état de l'environnement, au nombre d'au moins une.

6. Véhicule à chenilles selon une des revendications précédentes, **caractérisé en ce qu'**il est possible de saisir côté utilisateur et/ou de recevoir en tant que données spécifiques du véhicule, le type de véhicule, la charge d'essieu du véhicule (1), l'âge du moyen de prise au sol (10) respectif, la profondeur de profil du moyen de prise au sol (10) respectif et/ou la largeur des blocs de guidage intérieurs du moyen de prise au sol (10) respectif.

7. Véhicule à chenilles selon une des revendications précédentes, **caractérisé en ce que** par ailleurs, des données de capteur propres au véhicule sont prises en compte pour la détermination de l'état de fonctionnement.

8. Véhicule à chenilles selon une des revendications précédentes, **caractérisé en ce que** le dispositif d'évaluation (12) mobile est configuré pour effectuer, sur la base de l'état de fonctionnement déterminé, l'affichage d'une information au conducteur et/ou provoquer un affichage d'une information au conducteur dans un système d'assistance au conducteur (16) du véhicule (1) et/ou provoquer une régulation du véhicule (1) par l'intermédiaire d'un système d'assistance au conducteur (16).

9. Véhicule à chenilles selon la revendication 8, **caractérisé en ce que** l'information au conducteur comprend l'état de fonctionnement et/ou la durée de vie restante et/ou des recommandations concernant la vitesse de déplacement et/ou l'entretien du moyen de prise au sol (10) respectif.

10. Véhicule à chenilles selon la revendication 8 ou 9, **caractérisé en ce que** l'information au conducteur est affichée sous une forme graphique et/ou à l'aide de la Réalité Augmentée.

11. Véhicule à chenilles selon une des revendications précédentes, **caractérisé en ce que** l'état de fonctionnement respectif déterminé est enregistré dans une mémoire et/ou est recueilli.

12. Véhicule à chenilles selon une des revendications précédentes, **caractérisé en ce que** le(s) moyen(s) de prise au sol (10) dont on détermine l'état de fonctionnement est/sont dépourvu(s) de capteurs.

13. Procédé de détection de l'état de fonctionnement et/ou de détermination de la durée de vie d'au moins un moyen de prise au sol (10) d'un véhicule à chenilles selon une des revendications précédentes, à l'aide d'un dispositif d'évaluation (12) mobile, selon lequel respectivement un moyen de prise au sol (10), sous la forme d'une bande de chenille (9), est associé à des roues de train de roulement (5) individuelles et/ou à des unités constituées de plusieurs roues de train de roulement (3, 4) d'un train de roulement (2) réalisé sous forme de train de roulement à chenille (2a) du véhicule (1),
**caractérisé en ce que**
le dispositif d'évaluation (12) mobile détermine un état de fonctionnement de la bande de chenille (9), sur la base d'au moins une ou plusieurs grandeurs d'état de l'environnement et données de capteur propres au dispositif d'évaluation et indépendantes du véhicule, le dispositif d'évaluation (12) mobile déterminant la grandeur d'état de l'environnement, au nombre d'au moins une, l'état de fonctionnement étant un degré d'usure du moyen de prise au sol (10), où la température ambiante et/ou des données météorologiques est/sont prises en compte en tant que grandeur(s) d'état, le trajet parcouru dans un champ agricole étant pris en compte dans la détermination de l'état de fonctionnement, le dispositif d'évaluation (12) mobile déterminant les données de capteur propres au dispositif d'évaluation, sans capteurs propres au véhicule.
